# EUROPEAN PATENT APPLICATION

(11) **EP 4 387 370 A1**
(43) Date of publication of application: **19.06.2024**
(21) Application number: 22856290.6
(22) Date of filing: 12.08.2022
(51) Int. Cl.: H04W 74/08, H04W 24/08, H04W 84/12

(54) **METHOD AND DEVICE FOR SENSING-RELATED SETUP IN WIRELESS LAN SYSTEM**

(30) Priority: 13.08.2021 US 202163232643 P; 06.10.2021 US 202163252631 P; 21.10.2021 US 202163270057 P
(71) Applicant: LG Electronics Inc., Yeongdeungpo-gu Seoul 07336 (KR)
(72) Inventor: JANG, Insun, Seoul 06772 (KR); CHOI, Jinsoo, Seoul 06772 (KR); LIM, Dongguk, Seoul 06772 (KR); KIM, Sang Gook, San Diego, California 92131 (US)
(74) Representative: Frenkel, Matthias Alexander
(86) International application number: PCT/KR2022/012117
(87) International publication number: WO 2023/018297

(57) **Abstract**

Disclosed are a method and device for sensing-related setup in a wireless LAN system. A method for a first station (STA) to perform a sensing-related setup in a wireless LAN system according to an embodiment disclosed herein comprises the steps of: transmitting a setup request frame, including information related to the role of a second STA, to the second STA; and receiving a setup response frame from the second STA, wherein the information related to the role of the second STA can indicate a sensing transmitter role for the second STA, a sensing receptor role for the second STA, or both a sensing transmitter and sensing receptor role for the second STA.

## Description

### [Technical Field]

The present disclosure relates to a sensing procedure in a wireless local area network (WLAN) system, and more particularly, relates to a method and a device for sensing-related setup in a WLAN system.

### [Background Art]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

An improved technology for providing sensing for a device by using a WLAN signal (i.e., WLAN sensing) is being discussed. For example, in IEEE 802.11 task group (TG) bf, a standard technology for performing sensing for an object (e.g., a person, a people, a thing, etc.) is being developed based on channel estimation using a WLAN signal between devices operating in a frequency band below 7 GHz. Object sensing based on a WLAN signal has an advantage of utilizing the existing frequency band and an advantage of having a lower possibility of privacy infringement compared to the existing detection technology. As a frequency range utilized in a WLAN technology increases, precise sensing information may be obtained and along with it, a technology for reducing power consumption to efficiently support a precise sensing procedure is also being studied.

### [Disclosure]

### [Technical Problem]

A technical problem of the present disclosure is to provide a method and a device for sensing-related setup in a WLAN system.

An additional technical problem of the present disclosure is to provide a method and a device for indicating a role of a station (STA) in sensing-related setup in a WLAN system.

An additional technical problem of the present disclosure is to provide a transmission or reception method and device based on a parameter required for a sensing-related setup request and response process and a frame for exchanging it in a WLAN system.

The technical objects to be achieved by the present disclosure are not limited to the above-described technical objects, and other technical objects which are not described herein will be clearly understood by those skilled in the pertinent art from the following description.

### [Technical Solution]

A method for transmitting a trigger frame by a first station (STA) in a WLAN system according to an aspect of the present disclosure includes transmitting a first Physical layer Protocol Data Unit (PPDU) including the trigger frame to at least one second STA; and receiving a second PPDU based on the trigger frame from at least one of the at least one second STA, and a method for performing sensing-related setup by a first station (STA) in a WLAN system according to an aspect of the present disclosure includes transmitting to the second STA a setup request frame including information related to a role of a second STA; and receiving a setup response frame from the second STA, and information related to a role of the second STA may indicate a sensing transmitter role for the second STA, indicate a sensing receiver role for the second STA or indicate both a sensing transmitter role and a sensing receiver role for the second STA.

A method for performing sensing-related setup by a second station (STA) in a WLAN system according to an additional aspect of the present disclosure includes receiving from the first STA a setup request frame including information related to a role of the second STA; and transmitting a setup response frame to the first STA, and information related to a role of the second STA may indicate a sensing transmitter role for the second STA, indicate a sensing receiver role for the second STA or indicate both a sensing transmitter role and a sensing receiver role for the second STA.

### [Advantageous Effects]

According to the present disclosure, a method and a device for sensing-related setup in a WLAN system may be provided.

According to the present disclosure, a method and a device for indicating a role of a station (STA) in sensing-related setup in a WLAN system may be provided.

According to the present disclosure, a transmission or reception method and device based on a parameter required for a sensing-related setup request and response process and a frame for exchanging it in a WLAN system may be provided.

Effects achievable by the present disclosure are not limited to the above-described effects, and other effects which are not described herein may be clearly understood by those skilled in the pertinent art from the following description.

### [Description of Drawings]

The accompanying drawings, which are included as part of the detailed description to aid understanding of the present disclosure, provide embodiments of the present disclosure and together with the detailed description describe technical features of the present disclosure.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for explaining a link setup process to which the present disclosure may be applied.
FIG. 4 is a diagram for explaining a backoff process to which the present disclosure may be applied.
FIG. 5 is a diagram for explaining a frame transmission operation based on CSMA/CA to which the present disclosure may be applied.
FIG. 6 is a diagram for explaining an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for explaining examples of resource units of a WLAN system to which the present disclosure may be applied.
FIG. 11 illustrates an example structure of a HE-SIG-B field.
FIG. 12 is a diagram for explaining a MU-MIMO method in which a plurality of users/STAs are allocated to one RU.
FIG. 13 illustrates an example of a PPDU format to which the present disclosure may be applied.
FIG. 14 represents an illustrative format of a trigger frame to which the present disclosure may be applied.
FIG. 15 is a diagram for describing an example of a sensing-related setup request method of a first STA according to the present disclosure.
FIG. 16 is a diagram for describing an example of a sensing-related setup response method of a second STA according to the present disclosure.
FIG. 17 is a diagram showing an example of a format of a setup request frame or a setup response frame according to the present disclosure.
FIG. 18 is a diagram showing various examples of a sensing-related setup request and response according to the present disclosure.
FIG. 19 is a diagram showing examples of a sensing-related setup response method according to the present disclosure.
FIG. 20 is a diagram showing examples of a sensing-related setup request/response method according to the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition,"/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

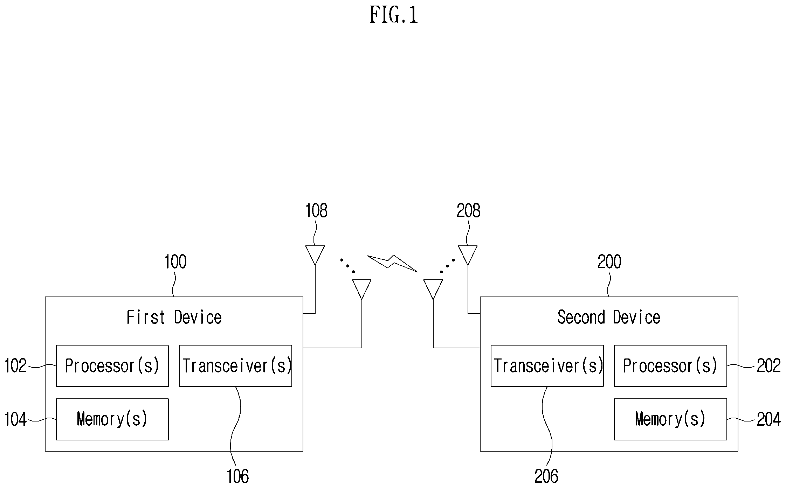

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) Determining / acquiring / configuring / calculating / decoding / encoding bit information of fields (signal (SIG), short training field (STF), long training field (LTF), Data, etc.) included in the PPDU, 2) Determining / configuring / acquiring time resources or frequency resources (e.g., subcarrier resources) used for fields (SIG, STF, LTF, Data, etc.) included in the PPDU; 3) Determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

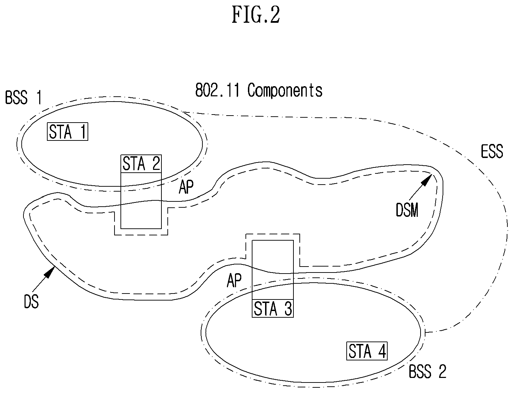

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form contaning only two STAs. For example, assuming that other components are omitted, BSS1 contaning only STA1 and STA2 or BSS2 contaning only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

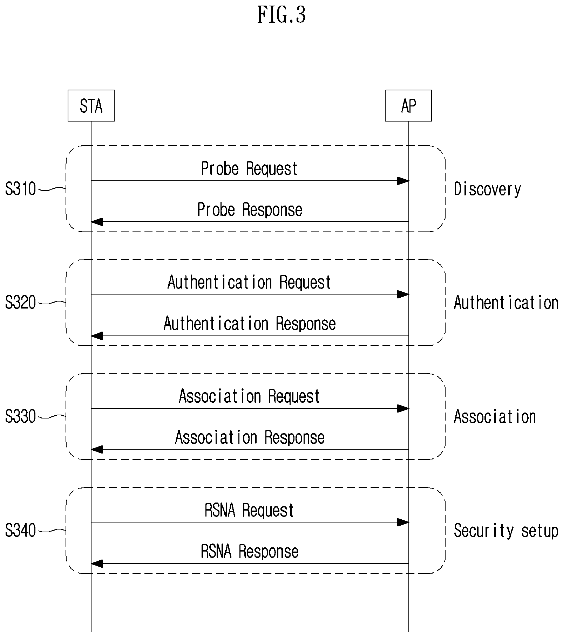

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

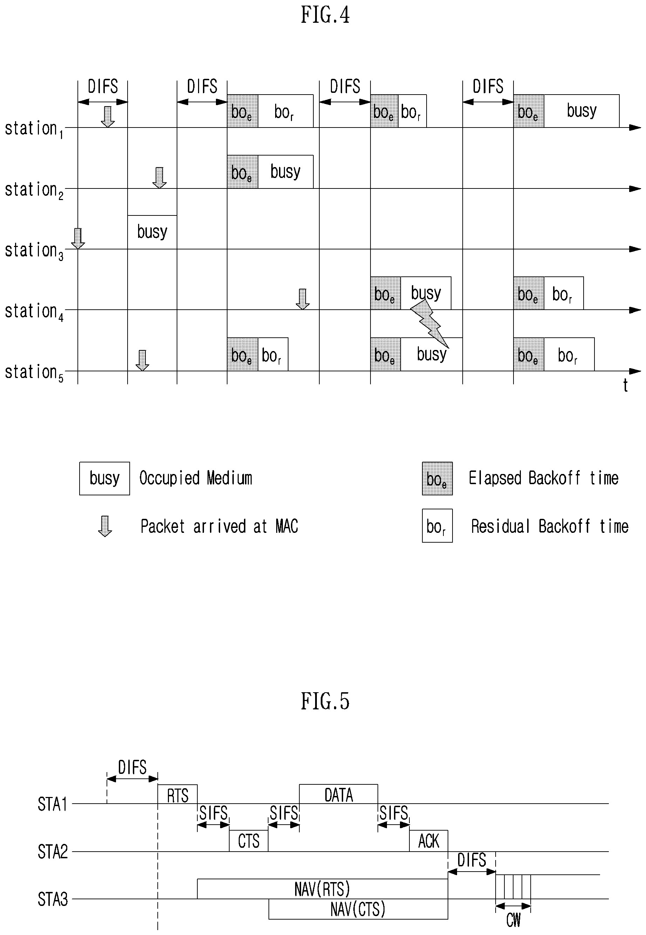

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2n-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request ( BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

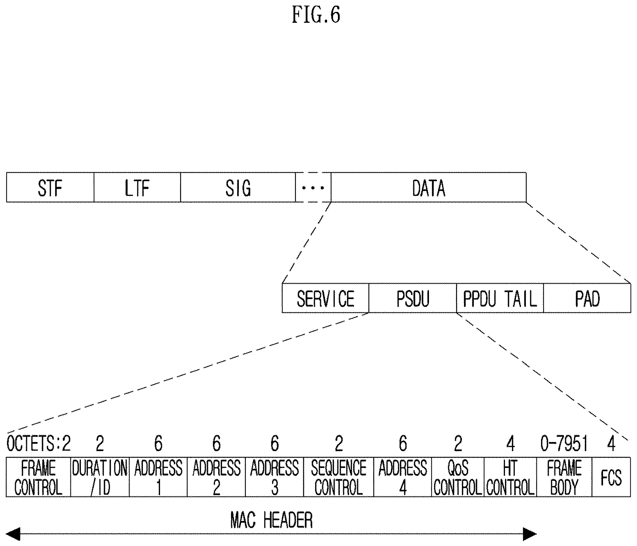

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

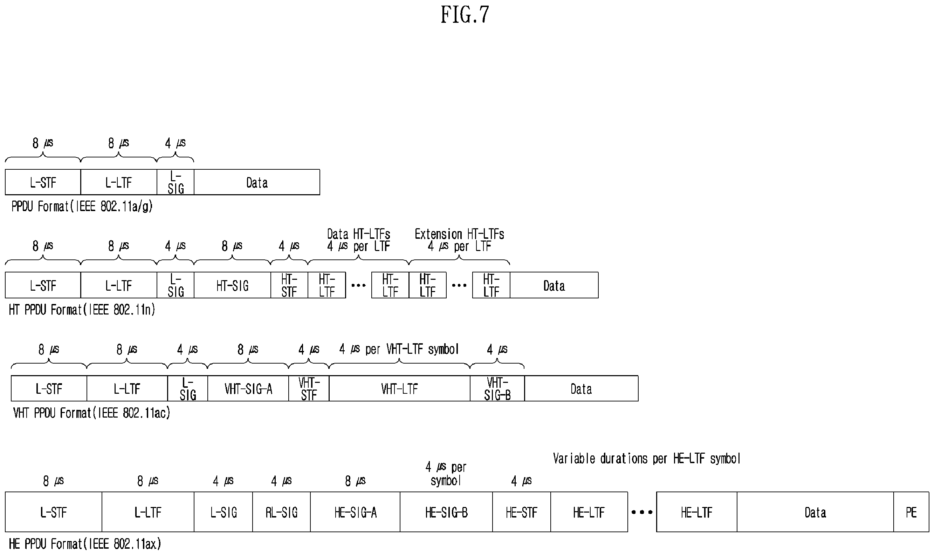

A basic PPDU frame may include a Short Training Field (STF), a Long Training Field (LTF), a SIGNAL (SIG) field, and a Data field. The most basic (e.g., non-High Throughput (HT)) PPDU frame format may consist of only L-STF (Legacy-STF), L-LTF (Legacy-LTF), SIG field, and data field. In addition, depending on the type of PPDU frame format (e.g., HT-mixed format PPDU, HT-greenfield format PPDU, VHT (Very High Throughput) PPDU, etc.), an additional (or different type) STF, LTF, and SIG fields may be included between the SIG field and the data field (this will be described later with reference to FIG. 7).

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include a RATE field and a LENGTH field. The RATE field may include information on modulation and coding rates of data. The LENGTH field may include information on the length of data. Additionally, the SIG field may include a parity bit, a SIG TAIL bit, and the like.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

A null-data packet (NDP) frame format means a frame format that does not include a data packet. That is, the NDP frame refers to a frame format that includes a physical layer convergence procedure (PLCP) header part (i.e., STF, LTF, and SIG fields) in a general PPDU frame format and does not include the remaining parts (i.e., data field). A NDP frame may also be referred to as a short frame format.

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format.

The HT PPDU format (IEEE 802.11n) additionally includes HT-SIG, HT-STF, and HT-LFT(s) fields to the basic PPDU format. The HT PPDU format shown in FIG. 7 may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format.

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format. Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us.

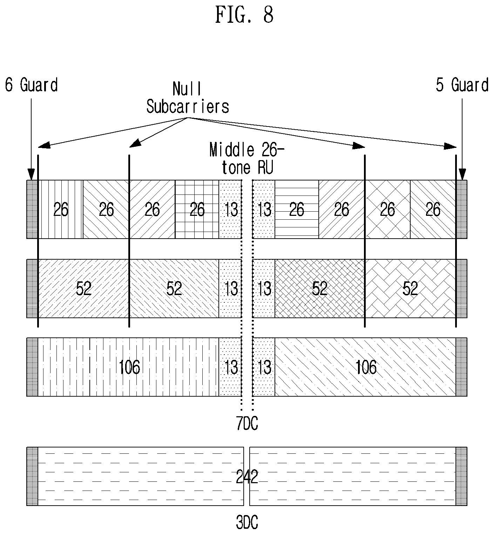

FIGs. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

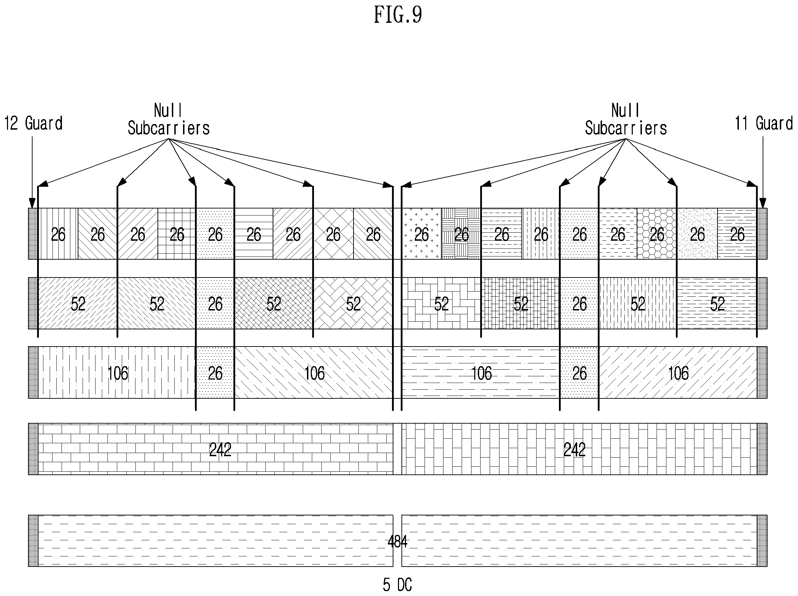

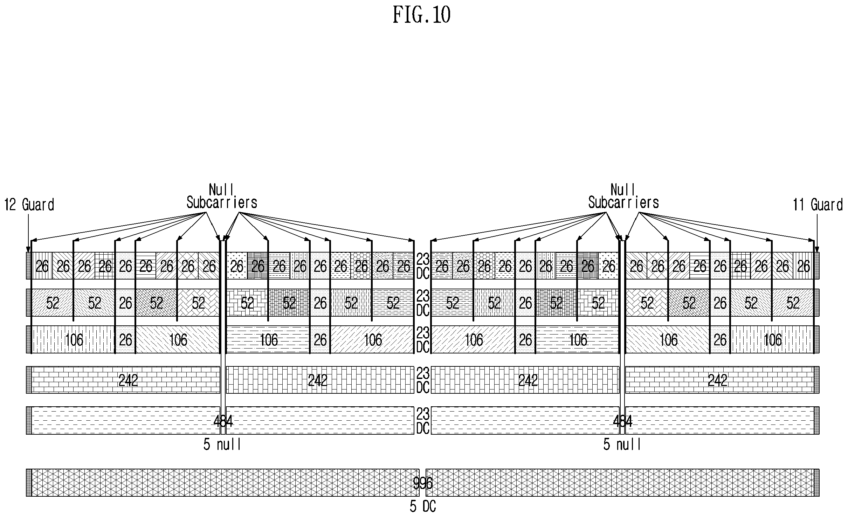

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8 .

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA transmitting the DL MU PPDU (e.g., AP) may allocate a first RU (e.g., 26/52/106/242-RU, etc.) to a first STA and allocate a second RU (e.g., 26/52/106/242-RU, etc.) to a second STA. That is, the transmitting STA (e.g., AP) may transmit HE-STF, HE-LTF, and Data field for the first STA through the first RU and transmit HE-STF, HE-LTF, and Data field for the second STA through the second RU, in one MU PPDU,

Information on the allocation of RUs may be signaled through HE-SIG-B in the HE PPDU format.

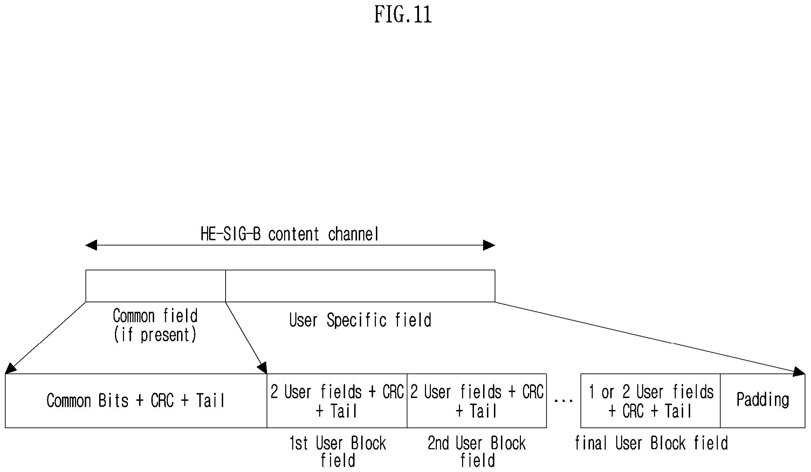

FIG. 11 illustrates an example structure of a HE-SIG-B field.

As shown, the HE-SIG-B field may include a common field and a user-specific field. If HE-SIG-B compression is applied (e.g., full-bandwidth MU-MIMO transmission), the common field may not be included in HE-SIG-B, and the HE-SIG-B content channel may include only a user-specific field. If HE-SIG-B compression is not applied, the common field may be included in HE-SIG-B.

The common field may include information on RU allocation (e.g., RU assignment, RUs allocated for MU-MIMO, the number of MU-MIMO users (STAs), etc.)

The common field may include N*8 RU allocation subfields. Here, N is the number of subfields, N = 1 in the case of 20 or 40 MHz MU PPDU, N = 2 in the case of 80 MHz MU PPDU, N = 4 in the case of 160 MHz or 80 + 80 MHz MU PPDU, etc. One 8-bit RU allocation subfield may indicate the size (26, 52, 106, etc.) and frequency location (or RU index) of RUs included in the 20 MHz band.

For example, if a value of the 8-bit RU allocation subfield is 00000000, it may indicate that nine 26-RUs are sequentially allocated in order from the leftmost to the rightmost in the example of FIG. 8, if the value is 00000001, it may indicate that seven 26-RUs and one 52-RU are sequentially allocated in order from leftmost to rightest, and if the value is 00000010, it may indicate that five 26-RUs, one 52-RU, and two 26-RUs are sequentially allocated from the leftmost side to the rightmost side.

As an additional example, if the value of the 8-bit RU allocation subfield is 01000y2yly0, it may indicate that one 106-RU and five 26-RUs are sequentially allocated from the leftmost to the rightmost in the example of FIG. 8. In this case, multiple users/STAs may be allocated to the 106-RU in the MU-MIMO scheme. Specifically, up to 8 users/STAs may be allocated to the 106-RU, and the number of users/STAs allocated to the 106-RU is determined based on 3-bit information (i.e., y2yly0). For example, when the 3-bit information (y2yly0) corresponds to a decimal value N, the number of users/STAs allocated to the 106-RU may be N+1.

Basically, one user/STA may be allocated to each of a plurality of RUs, and different users/STAs may be allocated to different RUs. For RUs larger than a predetermined size (e.g., 106, 242, 484, 996-tones, ...), a plurality of users/STAs may be allocated to one RU, and MU-MIMO scheme may be applied for the plurality of users/STAs.

The set of user-specific fields includes information on how all users (STAs) of the corresponding PPDU decode their payloads. User-specific fields may contain zero or more user block fields. The non-final user block field includes two user fields (i.e., information to be used for decoding in two STAs). The final user block field contains one or two user fields. The number of user fields may be indicated by the RU allocation subfield of HE-SIG-B, the number of symbols of HE-SIG-B, or the MU-MIMO user field of HE-SIG-A. A User-specific field may be encoded separately from or independently of a common field.

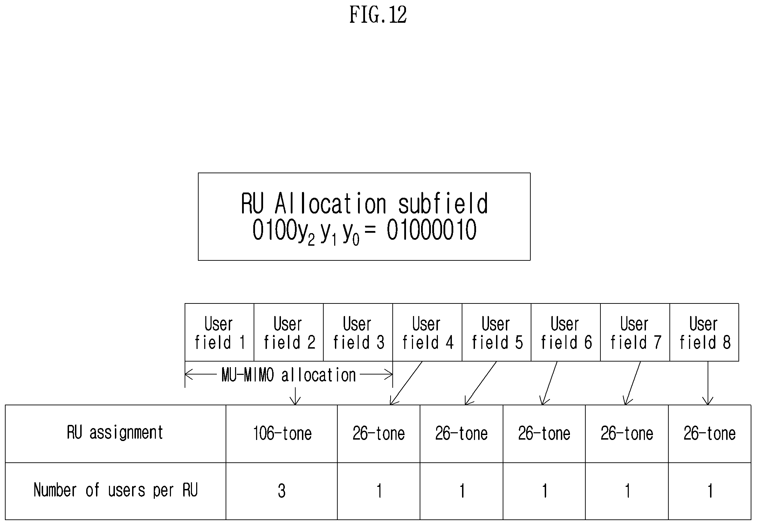

FIG. 12 is a diagram for explaining a MU-MIMO method in which a plurality of users/STAs are allocated to one RU.

In the example of FIG. 12, it is assumed that the value of the RU allocation subfield is 01000010. This corresponds to the case where y2y1y0 = 010 in 01000y2y1y0. 010 corresponds to 2 in decimal (i.e., N=2) and may indicate that 3 (=N+1) users are allocated to one RU. In this case, one 106-RU and five 26-RUs may be sequentially allocated from the leftmost side to the rightmost side of a specific 20 MHz band/channel. Three users/STAs may be allocated to the 106-RU in a MU-MIMO manner. As a result, a total of 8 users/STAs are allocated to the 20 MHz band/channel, and the user-specific field of HE-SIG-B may include 8 user fields (i.e., 4 user block fields). Eight user fields may be assigned to RUs as shown in FIG. 12.

The user field may be constructed based on two formats. The user field for a MU-MIMO allocation may be constructed with a first format, and the user field for non-MU-MIMO allocation may be constructed with a second format. Referring to the example of FIG. 12, user fields 1 to 3 may be based on the first format, and user fields 4 to 8 may be based on the second format. The first format and the second format may contain bit information of the same length (e.g., 21 bits).

The user field of the first format (i.e., format for MU-MIMO allocation) may be constructed as follows. For example, out of all 21 bits of one user field, B0-B10 includes the user's identification information (e.g., STA-ID, AID, partial AID, etc.), B11-14 includes spatial configuration information such as the number of spatial streams for the corresponding user, B15-B18 includes Modulation and Coding Scheme (MCS) information applied to the Data field of the corresponding PPDU, B19 is defined as a reserved field, and B20 may include information on a coding type (e.g., binary convolutional coding (BCC) or low-density parity check (LDPC)) applied to the Data field of the corresponding PPDU.

The user field of the second format (i.e., the format for non-MU-MIMO allocation) may be constructed as follows. For example, out of all 21 bits of one user field, B0-B10 includes the user's identification information (e.g., STA-ID, AID, partial AID, etc.), B11-13 includes information on the number of spatial streams (NSTS) applied to the corresponding RU, B14 includes information indicating whether beamforming is performed (or whether a beamforming steering matrix is applied), B15-B18 includes Modulation and Coding Scheme (MCS) information applied to the Data field of the corresponding PPDU, B19 includes information indicating whether DCM (dual carrier modulation) is applied, and B20 may include information on a coding type (e.g., BCC or LDPC) applied to the Data field of the corresponding PPDU.

MCS, MCS information, MCS index, MCS field, and the like used in the present disclosure may be indicated by a specific index value. For example, MCS information may be indicated as index 0 to index 11. MCS information includes information on constellation modulation type (e.g., BPSK, QPSK, 16-QAM, 64-QAM, 256-QAM, 1024-QAM, etc.), and coding rate (e.g., 1/2, 2/ 3, 3/4, 5/6, etc.). Information on a channel coding type (e.g., BCC or LDPC) may be excluded from the MCS information.

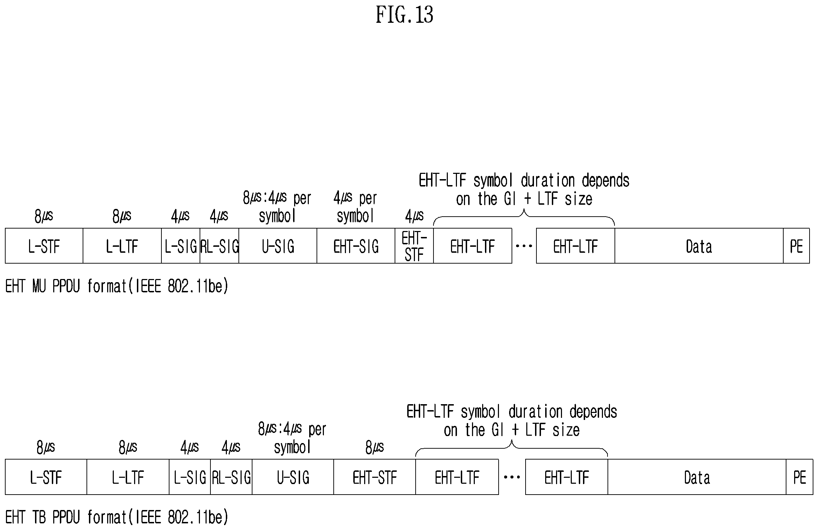

FIG. 13 illustrates an example of a PPDU format to which the present disclosure may be applied.

The PPDU of FIG. 13 may be referred as various names such as an EHT PPDU, a transmitted PPDU, a received PPDU, a first type or an Nth type PPDU. For example, the PPDU or EHT PPDU of the present disclosure may be referred as various names such as a transmission PPDU, a reception PPDU, a first type or an Nth type PPDU. In addition, the EHT PPU may be used in an EHT system and/or a new wireless LAN system in which the EHT system is improved.

The EHT MU PPDU of FIG. 13 corresponds to a PPDU carrying one or more data (or PSDUs) for one or more users. That is, the EHT MU PPDU may be used for both SU transmission and MU transmission. For example, the EHT MU PPDU may correspond to a PPDU for one receiving STA or a plurality of receiving STAs.

In the EHT TB PPDU of FIG. 13, the EHT-SIG is omitted compared to the EHT MU PPDU. Upon receiving a trigger for UL MU transmission (eg, a trigger frame or TRS), the STA may perform UL transmission based on the EHT TB PPDU format.

In the example of the EHT PPDU format of FIG. 13, L-STF to EHT-LTF correspond to a preamble or a physical preamble, and may be generated/transmitted/received/acquired/decoded in the physical layer .

A Subcarrier frequency spacing of L-STF, L-LTF, L-SIG, RL-SIG, Universal SIGNAL (U-SIG), EHT-SIG field (these are referred to as pre-EHT modulated fields) may be set to 312.5 kHz. A subcarrier frequency spacing of the EHT-STF, EHT-LTF, Data, and PE field (these are referred to as EHT modulated fields) may be set to 78.125 kHz. That is, the tone/subcarrier index of L-STF, L-LTF, L-SIG, RL-SIG, U-SIG, and EHT-SIG field may be indicated in units of 312.5 kHz, and the tone/subcarrier index of EHT-STF, EHT-LTF, Data, and PE field may be indicated in units of 78.125 kHz.

The L-LTF and L-STF of FIG. 13 may be constructed identically to the corresponding fields of the PPDU described in FIGS. 6 to 7.

The L-SIG field of FIG. 13 may be constructed with 24 bits and may be used to communicate rate and length information. For example, the L-SIG field includes a 4-bit Rate field, a 1-bit Reserved bit, a 12-bit Length field, a 1-bit Parity field, and a 6-bit Tail field may be included. For example, the 12-bit Length field may include information on a time duration or a length of the PPDU. For example, a value of the 12-bit Length field may be determined based on the type of PPDU. For example, for a non-HT, HT, VHT, or EHT PPDU, the value of the Length field may be determined as a multiple of 3. For example, for the HE PPDU, the value of the Length field may be determined as a multiple of 3 + 1 or a multiple of 3 + 2.

For example, the transmitting STA may apply BCC encoding based on a coding rate of 1/2 to 24-bit information of the L-SIG field. Thereafter, the transmitting STA may obtain 48-bit BCC coded bits. BPSK modulation may be applied to 48-bit coded bits to generate 48 BPSK symbols. The transmitting STA may map 48 BPSK symbols to any location except for a pilot subcarrier (e,g,, {subcarrier index - 21, -7, +7, +21}) and a DC subcarrier (e.g., {subcarrier index 0}). As a result, 48 BPSK symbols may be mapped to subcarrier indices -26 to -22, -20 to -8, -6 to -1, +1 to +6, +8 to +20, and +22 to +26. The transmitting STA may additionally map the signals of {-1, -1, -1, 1} to the subcarrier index {-28, -27, +27, +28}. The above signal may be used for channel estimation in the frequency domain corresponding to {-28, -27, +27, +28}.

The transmitting STA may construct RL-SIG which is constructed identically to L-SIG. For RL-SIG, BPSK modulation is applied. The receiving STA may recognize that the received PPDU is a HE PPDU or an EHT PPDU based on the existence of the RL-SIG.

After the RL-SIG of FIG. 13, a Universal SIG (U-SIG) may be inserted. The U-SIG may be referred as various names such as a first SIG field, a first SIG, a first type SIG, a control signal, a control signal field, and a first (type) control signal, etc.

The U-SIG may include N-bit information and may include information for identifying the type of EHT PPDU. For example, U-SIG may be configured based on two symbols (e.g., two consecutive OFDM symbols). Each symbol (e.g., OFDM symbol) for the U-SIG may have a duration of 4us, and the U-SIG may have a total 8us duration. Each symbol of the U-SIG may be used to transmit 26 bit information. For example, each symbol of the U-SIG may be transmitted and received based on 52 data tones and 4 pilot tones.

Through the U-SIG (or U-SIG field), for example, A bit information (e.g., 52 un-coded bits) may be transmitted, the first symbol of the U-SIG (e.g., U-SIG-1) may transmit the first X bit information (e.g., 26 un-coded bits) of the total A bit information, and the second symbol of the U-SIG (e.g., U-SIG-2) may transmit the remaining Y-bit information (e.g., 26 un-coded bits) of the total A-bit information. For example, the transmitting STA may obtain 26 un-coded bits included in each U-SIG symbol. The transmitting STA may generate 52-coded bits by performing convolutional encoding (e.g., BCC encoding) based on a rate of R = 1/2, and perform interleaving on the 52-coded bits. The transmitting STA may generate 52 BPSK symbols allocated to each U-SIG symbol by performing BPSK modulation on the interleaved 52-coded bits. One U-SIG symbol may be transmitted based on 56 tones (subcarriers) from subcarrier index -28 to subcarrier index +28, except for DC index 0. The 52 BPSK symbols generated by the transmitting STA may be transmitted based on the remaining tones (subcarriers) excluding pilot tones -21, -7, +7, and +21 tones.

For example, the A bit information (e.g., 52 un-coded bits) transmitted by the U-SIG includes a CRC field (e.g., a 4-bit field) and a tail field (e.g., 6 bit-length field). The CRC field and the tail field may be transmitted through the second symbol of the U-SIG. The CRC field may be constructed based on 26 bits allocated to the first symbol of U-SIG and 16 bits remaining except for the CRC/tail field in the second symbol, and may be constructed based on a conventional CRC calculation algorithm. In addition, the tail field may be used to terminate the trellis of the convolution decoder, and for example, the tail field may be set to 0.

A bit information (e.g., 52 un-coded bits) transmitted by the U-SIG (or U-SIG field) may be divided into version-independent bits and version-independent bits. For example, a size of the version-independent bits may be fixed or variable. For example, the version-independent bits may be allocated only to the first symbol of U-SIG, or the version-independent bits may be allocated to both the first symbol and the second symbol of U-SIG. For example, the version-independent bits and the version-dependent bits may be referred as various names such as a first control bit and a second control bit, etc.

For example, the version-independent bits of the U-SIG may include a 3-bit physical layer version identifier (PHY version identifier). For example, the 3-bit PHY version identifier may include information related to the PHY version of the transmitted/received PPDU. For example, the first value of the 3-bit PHY version identifier may indicate that the transmission/reception PPDU is an EHT PPDU. In other words, when transmitting the EHT PPDU, the transmitting STA may set the 3-bit PHY version identifier to a first value. In other words, the receiving STA may determine that the received PPDU is an EHT PPDU based on the PHY version identifier having the first value.

For example, the version-independent bits of U-SIG may include a 1-bit UL/DL flag field. A first value of the 1-bit UL/DL flag field is related to UL communication, and a second value of the UL/DL flag field is related to DL communication.

For example, the version-independent bits of the U-SIG may include information on the length of a transmission opportunity (TXOP) and information on a BSS color ID.

For example, if the EHT PPDU is classified into various types (e.g., EHT PPDU related to SU mode, EHT PPDU related to MU mode, EHT PPDU related to TB mode, EHT PPDU related to Extended Range transmission, etc.), information on the type of EHT PPDU may be included in the version-dependent bits of the U-SIG.

For example, the U-SIG may include information on 1) a bandwidth field containing information on a bandwidth, 2) a field containing information on a MCS scheme applied to EHT-SIG, 3) an indication field containing information related to whether the DCM technique is applied to the EHT-SIG, 4) a field containing information on the number of symbols used for EHT-SIG, 5) a field containing information on whether EHT-SIG is constructed over all bands, 6) a field containing information on the type of EHT-LTF/STF, and 7) a field indicating the length of EHT-LTF and CP length.

Preamble puncturing may be applied to the PPDU of FIG. 13. Preamble puncturing may mean transmission of a PPDU for which no signal is present in one or more 20 MHz subchannels among the bandwidth of the PPDU. Preamble puncturing may be applied to a PPDU transmitted to one or more users. For example, the resolution of preamble puncturing may be 20 MHz for EHT MU PPDUs in OFDMA transmissions with bandwidths greater than 40 MHz and non-OFDMA transmissions with 80 MHz and 160 MHz bandwidths. That is, in the above case, puncturing on a subchannel smaller than 242-tone RU may not be allowed. In addition, for an EHT MU PPDU in non-OFDMA transmission with a bandwidth of 320 MHz, the resolution of preamble puncturing may be 40 MHz. That is, puncturing for a subchannel smaller than 484-tone RU in a 320 MHz bandwidth may not be allowed. In addition, preamble puncturing may not be applied to the primary 20 MHz channel in the EHT MU PPDU.

For example, for an EHT MU PPDU, information on preamble puncturing may be included in the U-SIG and/or the EHT-SIG. For example, the first field of the U-SIG may include information on the contiguous bandwidth of the PPDU, and the second field of the U-SIG may include information on preamble puncturing applied to the PPDU.

For example, the U-SIG and the EHT-SIG may include information on preamble puncturing based on the following method. If the bandwidth of the PPDU exceeds 80 MHz, the U-SIG may be individually constructed in units of 80 MHz. For example, if the bandwidth of the PPDU is 160 MHz, the PPDU may include a first U-SIG for a first 80 MHz band and a second U-SIG for a second 80 MHz band. In this case, the first field of the first U-SIG includes information on the 160 MHz bandwidth, and the second field of the first U-SIG includes information on preamble puncturing applied to the first 80 MHz band (i.e., information on a preamble puncturing pattern). In addition, the first field of the second U-SIG includes information on a 160 MHz bandwidth, and the second field of the second U-SIG includes information on preamble puncturing applied to a second 80 MHz band (i.e., information on a preamble puncturing pattern). The EHT-SIG following the first U-SIG may include information on preamble puncturing applied to the second 80 MHz band (i.e., information on a preamble puncturing pattern), and the EHT-SIG following the second U-SIG may include information on preamble puncturing applied to the first 80 MHz band (i.e., information on a preamble puncturing pattern).

Additionally or alternatively, the U-SIG and the EHT-SIG may include information on preamble puncturing based on the following method. The U-SIG may include information on preamble puncturing for all bands (i.e., information on a preamble puncturing pattern). That is, EHT-SIG does not include information on preamble puncturing, and only U-SIG may include information on preamble puncturing (ie, information on a preamble puncturing pattern).

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

The EHT-SIG of FIG. 13 may include control information for the receiving STA. EHT-SIG may be transmitted through at least one symbol, and one symbol may have a length of 4us. Information on the number of symbols used for EHT-SIG may be included in U-SIG.

The EHT-SIG may include technical features of HE-SIG-B described through FIGS. 11 and 12. For example, EHT-SIG, like the example of FIG. 8, may include a common field and a user-specific field. The Common field of the EHT-SIG may be omitted, and the number of user-specific fields may be determined based on the number of users.

As in the example of FIG. 11, the common field of the EHT-SIG and the user-specific field of the EHT-SIG may be coded separately. One user block field included in the user-specific field may contain information for two user fields, but the last user block field included in the user-specific field may contain one or two user fields. That is, one user block field of the EHT-SIG may contain up to two user fields. As in the example of FIG. 12, each user field may be related to MU-MIMO allocation or non-MU-MIMO allocation.

In the same way as in the example of FIG. 11, the common field of the EHT-SIG may include a CRC bit and a Tail bit, The length of the CRC bit may be determined as 4 bits, and the length of the tail bit is determined by 6 bits and may be set to 000000.

As in the example of FIG. 11, the common field of the EHT-SIG may include RU allocation information. RU allocation information may mean information on the location of an RU to which a plurality of users (i.e., a plurality of receiving STAs) are allocated. RU allocation information may be configured in units of 9 bits (or N bits).

A mode in which a common field of EHT-SIG is omitted may be supported. The mode in which the common field of the EHT-SIG is omitted may be referred as a compressed mode. When the compressed mode is used, a plurality of users (i.e., a plurality of receiving STAs) of the EHT PPDU may decode the PPDU (e.g., the data field of the PPDU) based on non-OFDMA. That is, a plurality of users of the EHT PPDU may decode a PPDU (e.g., a data field of the PPDU) received through the same frequency band. When a non-compressed mode is used, multiple users of the EHT PPDU may decode the PPDU (e.g., the data field of the PPDU) based on OFDMA. That is, a plurality of users of the EHT PPDU may receive the PPDU (e.g., the data field of the PPDU) through different frequency bands.

EHT-SIG may be constructed based on various MCS scheme. As described above, information related to the MCS scheme applied to the EHT-SIG may be included in the U-SIG. The EHT-SIG may be constructed based on the DCM scheme. The DCM scheme may reuse the same signal on two subcarriers to provide an effect similar to frequency diversity, reduce interference, and improve coverage. For example, modulation symbols to which the same modulation scheme is applied may be repeatedly mapped on available tones/subcarriers. For example, modulation symbols (e.g., BPSK modulation symbols) to which a specific modulation scheme is applied may be mapped to first contiguous half tones (e.g., 1st to 26th tones) among the N data tones (e.g., 52 data tones) allocated for EHT-SIG, and modulation symbols (e.g., BPSK modulation symbols) to which the same specific modulation scheme is applied may be mapped to the remaining contiguous half tones (e.g., 27th to 52nd tones). That is, a modulation symbol mapped to the 1st tone and a modulation symbol mapped to the 27th tone are the same. As described above, information related to whether the DCM scheme is applied to the EHT-SIG (e.g., a 1-bit field) may be included in the U-SIG. The EHT-STF of FIG. 13 may be used to enhance automatic gain control (AGC) estimation in a MIMO environment or an OFDMA environment. The EHT-LTF of FIG. 13 may be used to estimate a channel in a MIMO environment or an OFDMA environment.

Information on the type of STF and/or LTF (including information on a guard interval (GI) applied to LTF) may be included in the U-SIG field and/or the EHT-SIG field of FIG. 13.

The PPDU (i.e., EHT PPDU) of FIG. 13 may be constructed based on an example of RU allocation of FIGS. 8 to 10.

For example, a EHT PPDU transmitted on a 20 MHz band, that is, a 20 MHz EHT PPDU may be constructed based on the RU of FIG. 8. That is, a RU location of EHT-STF, EHT-LTF, and data field included in the EHT PPDU may be determined as shown in FIG. 8. A EHT PPDU transmitted on a 40 MHz band, that is, a 40 MHz EHT PPDU may be constructed based on the RU of FIG. 9. That is, a RU location of EHT-STF, EHT-LTF, and data field included in the EHT PPDU may be determined as shown in FIG. 9.

The EHT PPDU transmitted on the 80 MHz band, that is, the 80 MHz EHT PPDU may be constructed based on the RU of FIG. 10. That is, a RU location of EHT-STF, EHT-LTF, and data field included in the EHT PPDU may be determined as shown in FIG. 10. The tone-plan for 80 MHz in FIG. 10 may correspond to two repetitions of the tone-plan for 40 MHz in FIG. 9.

The tone-plan for 160/240/320 MHz may be configured in the form of repeating the pattern of FIG. 9 or 10 several times.

The PPDU of FIG. 13 may be identified as an EHT PPDU based on the following method.

The receiving STA may determine the type of the received PPDU as the EHT PPDU based on the following. For example, when 1) the first symbol after the L-LTF signal of the received PPDU is BPSK, 2) RL-SIG in which the L-SIG of the received PPDU is repeated is detected, and 3) the result of applying the modulo 3 calculation to the value of the Length field of the L-SIG of the received PPDU (i.e., the remainder after dividing by 3) is detected as 0, the received PPDU may be determined as a EHT PPDU. When the received PPDU is determined to be an EHT PPDU, the receiving STA may determine the type of the EHT PPDU based on bit information included in symbols subsequent to the RL-SIG of FIG. 13. In other words, the receiving STA may determine the received PPDU as a EHT PPDU, based on 1) the first symbol after the L-LTF signal, which is BSPK, 2) RL-SIG contiguous to the L-SIG field and identical to the L-SIG, and 3) L-SIG including a Length field in which the result of applying modulo 3 is set to 0.

For example, the receiving STA may determine the type of the received PPDU as the HE PPDU based on the following. For example, when 1) the first symbol after the L-LTF signal is BPSK, 2) RL-SIG in which L-SIG is repeated is detected, and 3) the result of applying modulo 3 to the length value of L-SIG is detected as 1 or 2, the received PPDU may be determined as a HE PPDU.

For example, the receiving STA may determine the type of the received PPDU as non-HT, HT, and VHT PPDU based on the following. For example, when 1) the first symbol after the L-LTF signal is BPSK and 2) RL-SIG in which L-SIG is repeated is not detected, the received PPDU may be determined as non-HT, HT, and VHT PPDU.

In addition, when the receiving STA detects an RL-SIG in which the L-SIG is repeated in the received PPDU, it may be determined that the received PPDU is a HE PPDU or an EHT PPDU. In this case, if the rate (6Mbps) check fails, the received PPDU may be determined as a non-HT, HT, or VHT PPDU. If the rate (6Mbps) check and parity check pass, when the result of applying modulo 3 to the Length value of L-SIG is detected as 0, the received PPDU may be determined as an EHT PPDU, and when the result of Length mod 3 is not 0, it may be determined as a HE PPDU.

The PPDU of FIG. 13 may be used to transmit and receive various types of frames. For example, the PPDU of FIG. 13 may be used for (simultaneous) transmission and reception of one or more of a control frame, a management frame, or a data frame.

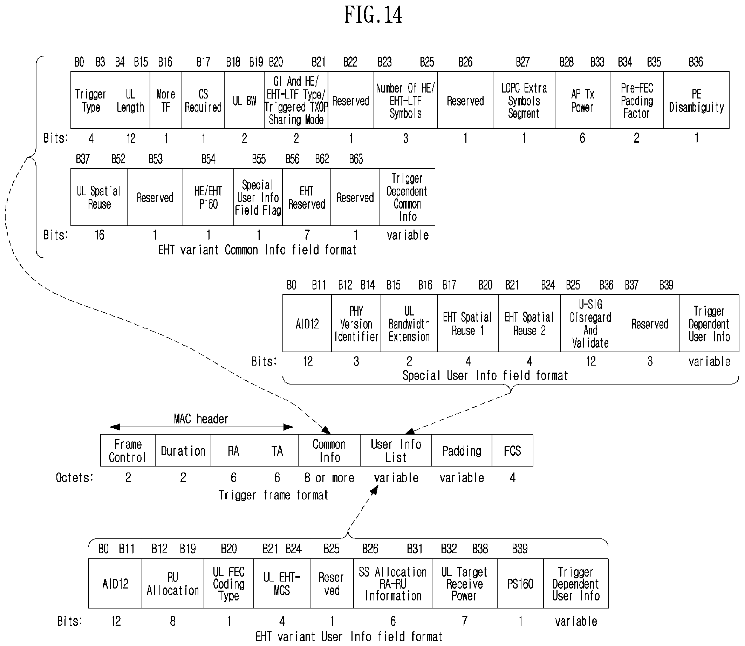

FIG. 14 represents an illustrative format of a trigger frame to which the present disclosure may be applied.

A trigger frame may allocate a resource for at least one TB PPDU transmission and request TB PPDU transmission. A trigger frame may also include other information required by a STA which transmits a TB PPDU in response thereto. A trigger frame may include common information and a user information list field in a frame body.

A common information field may include information commonly applied to at least one TB PPDU transmission requested by a trigger frame, e.g., a trigger type, a UL length, whether a subsequent trigger frame exists (e.g., More TF), whether channel sensing (CS) is required, a UL bandwidth (BW), etc. FIG. 14 illustratively shows a EHT variant common information field format.

A trigger type subfield in a 4-bit size may have a value from 0 to 15. Among them, a value of a trigger type subfield, 0, 1, 2, 3, 4, 5, 6 and 7, is defined as corresponding to basic, Beamforming Report Poll (BFRP), multi user-block acknowledgment request (MU-BAR), multi user-request to send (MU-RTS), Buffer Status Report Poll (BSRP), groupcast with retries (GCR) MU-BAR, Bandwidth Query Report Poll (BQRP) and NDP Feedback Report Poll (NFRP) and a value of 8-15 is defined as being reserved.

Among common information, a trigger dependent common information subfield may include information that is selectively included based on a trigger type.

A special user information field may be included in a trigger frame. A special user information field does not include user-specific information, but includes extended common information which is not provided in a common information field.

A user information list includes at least 0 user information field. FIG. 14 illustratively represents an EHT variant user information field format.

It represents that a AID12 subfield is basically a user information field for a STA having a corresponding AID. In addition, when a AID12 field has a predetermined specific value, it may be utilized for other purpose including allocating a random access (RA)-RU or being configured in a form of a special user information field. A special user information field is a user information field which does not include user-specific information but includes extended common information not provided in a common information field. For example, a special user information field may be identified by an AID12 value of 2007 and a special user information field flag subfield in a common information field may represent whether a special user information field is included.

A RU allocation subfield may represent a size and a position of a RU/a MRU. To this end, a RU allocation subfield may be interpreted with a PS160 (primary/secondary 160MHz) subfield of a user information field, a UL BW subfield of a common information field, etc.

### Sensing-related Setup

WLAN sensing may include a STA acquiring sensing measurement for channel(s) between a corresponding STA and at least one another STA. For example, a first STA may transmit a signal for a sensing purpose and a second STA may receive a signal influenced by a target and measure a channel based thereon. A second STA may transmit a sensing measurement result to a first STA and a first STA may identify a target based on a measurement result.

This WLAN sensing procedure may include phases such as capability advertisement and negotiation, setup, sensing and tear-down.

A capability advertisement and negotiation process may include exchanging capability information of sensing-related station(s) and establishing an association. Through it, STAs may determine whether sensing is possible, whether to have a proper sensing capability, etc. and perform association based thereon. This process may be also referred to as a discovery and association process.

A setup process may include negotiation on a role of each STA related to sensing and parameters to be used in a sensing process. A negotiated role and parameter may be used in a sensing session before tear-down. This negotiation step may or may not be included. In addition, if necessary, a setup process may also include grouping of STAs.

Basically, a setup process may be divided into sensing session setup and sensing measurement setup. In other words, after sensing session setup which forms a session between STAs is performed, sensing measurement setup that negotiates sensing measurement and specific operation parameters (e.g., a measurement setup ID, a role, etc.) may be performed.

A sensing process may include transmission of a sensing signal by STAs, reception and measurement of a sensing signal that passed through a target (or influenced by a target) or feedback of a measurement result. Steps of sensing signal transmission or reception, measurement and feedback may be defined as one sensing session. In other words, a sensing process may include measurement and feedback (or reporting) during a sensing session. Alternatively, a feedback/reporting process may be included only when necessary.

Basically, a sensing process may be configured based on a measurement instance. For example, multiple measurement instances may be configured by using roles and parameters negotiated through a measurement setup ID. A sensing session may include at least one TXOP. A TXOP may correspond to a measurement instance or one TXOP may include a plurality of measurement instances.

A tear-down process may include a negotiation step for resetting a negotiated role and parameter and starting a sensing session again. This process may or may not be included according to whether there is a negotiation step.

To express the same meaning differently, a sensing procedure may include at least one of sensing session setup, sensing measurement setup, at least one sensing measurement instance, sensing measurement setup end (or tear-down) or sensing session end (or tear-down).

A role of a STA performing a WLAN sensing operation may be defined as follows.

A sensing initiator is a STA that initiates a WLAN sensing session.

A sensing responder is a STA that participates in a WLAN sensing session initiated by a sensing initiator.

A sensing transmitter is a STA that transmits a signal (or a PPDU) used for sensing measurement in a sensing session.

A sensing receiver is a STA that receives a signal (a PPDU) transmitted by a sensing transmitter and performs sensing measurement.

For example, a sensing transmitter is not necessarily a sensing initiator. In other words, a role of a sensing transmitter may be performed separately from (or regardless of) initiating or participating in a sensing session. In addition, a plurality of STAs may sequentially perform a role of a sensing transmitter or may perform a role of a receiver that receives a sensing signal transmitted by another STA.

In addition, a STA may perform a role of a sensing initiator/responder/transmitter/receiver without distinguishing between a P STA and a non-AP STA.

Hereinafter, specific examples of sensing-related setup according to the present disclosure are described. Sensing-related setup may include at least one of sensing session setup or sensing measurement setup. In other words, unless explicitly distinguished in examples below, specific examples of a sensing-related setup procedure may be applied to a sensing session setup procedure, may be applied to a sensing measurement setup procedure or may be applied to both a sensing session setup procedure and a sensing measurement setup procedure.

For example, in a sensing-related setup process, a request and a response may be performed in a trigger-based manner. The present disclosure is not limited by a trigger-based request response method and includes examples in which various parameters described later are included in a request frame and/or a response frame in another setup-related request and response procedure.

In addition, a STA is not limited to a non-AP STA or an AP STA unless specifically specified. In addition, in the present disclosure, a STA capable of sensing (or having a sensing-related capability) may be expressed as a SENS STA, a sensing-related setup request may be expressed as a SENS request, a STA transmitting a SENS request may be expressed as a SENS RQSTA, a sensing-related setup response may be expressed as a SENS response and a STA transmitting a SENS response may be expressed as a SENS RPSTA. In some embodiments, a SENS RQSTA may be referred to as a first STA and a SENS RPSTA may be referred to as a second STA. Here, a scope of the present disclosure is not limited by these names.

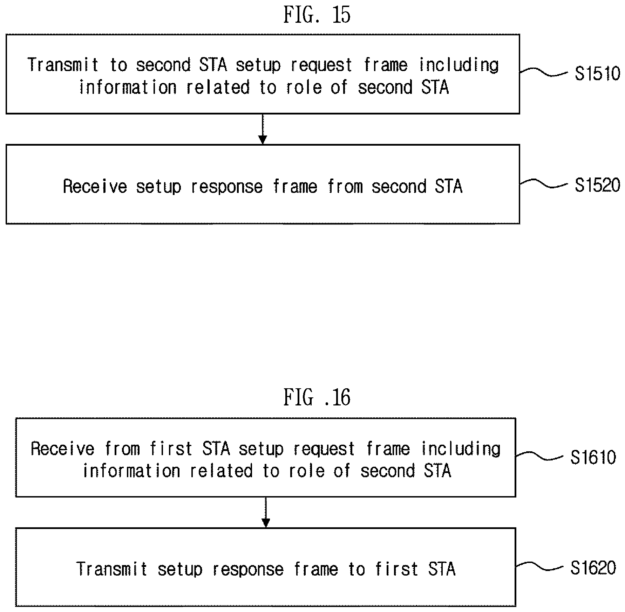

FIG. 15 is a diagram for describing an example of a sensing-related setup request method of a first STA according to the present disclosure.

In S1510, a first STA may transmit a setup request frame to a second STA.

A setup request frame may include information related to a role of a second STA. Information related to a role of a second STA may indicate a sensing transmitter role for a second STA, indicate a sensing receiver role for a second STA or indicate both a sensing transmitter role and a sensing receiver role for a second STA.

A setup request frame may further include measurement setup identification information (ID). Based thereon, a second STA may correspond to a sensing responder corresponding to a measurement setup ID. A first STA may correspond to a sensing initiator.

In S1520, a first STA may receive a setup response frame from a second STA.

A setup response frame may include at least one setup response frame transmitted by at least one STA including a second STA.

For example, a setup request frame may include trigger-related information or a trigger frame may be transmitted from a first STA following a setup request frame. In this case, at least one setup response frame may be transmitted simultaneously from at least one STA (including a second STA).

For example, each of at least one STA (including a second STA) that received a setup request frame may individually transmit a setup response frame through individual backoff after CTS transmission. Alternatively, each of at least one STA (including a second STA) that received a setup request frame may receive a polling frame from a first STA and individually transmit a polling-based response frame.

In addition, a setup response frame may include information related to a role of a second STA. Information related to a role of a second STA may indicate a sensing transmitter role for a second STA, indicate a sensing receiver role for a second STA or indicate both a sensing transmitter role and a sensing receiver role for a second STA.

In S1510 and S1520, when information related to a role of a second STA indicates at least a sensing receiver role for a second STA (i.e., indicates a sensing receiver role or indicates both a sensing transmitter role and a sensing receiver role), sensing measurement reporting-related information may be included in a setup request frame. Alternatively, when information related to a role of a second STA indicates at least a sensing receiver role for a second STA, sensing measurement reporting-related information may be included in a setup response frame. Alternatively, when information related to a role of a second STA indicates at least a sensing receiver role for a second STA, sensing measurement reporting-related information may be included in a setup request frame and a setup response frame.

Here, sensing measurement reporting-related information may include information indicating a sensing measurement reporting type (e.g., whether a sensing measurement reporting type includes a type related to channel state information (CSI) or another type of reporting or includes a CSI type for a specific unit, etc.)

FIG. 16 is a diagram for describing an example of a sensing-related setup response method of a second STA according to the present disclosure.

In S1610, a second STA may receive a setup request frame from a first STA.

In S1620, a second STA may transmit a setup response frame to a first STA.

Since specific details of S1610 and S1620 are the same as those described by referring to an example of FIG. 15, an overlapping description is omitted.

Hereinafter, specific examples of a sensing-related setup operation of the present disclosure are described.

In the present disclosure, sensing-related setup (e.g., sensing session setup and/or sensing measurement setup) may be performed by defining and exchanging a new negotiation frame. For example, a new negotiation frame may correspond to a negotiation frame which is newly defined for a specific purpose or usage like an add block ack (ADDBA) request frame and an ADDBA response frame for an existing block ACK (BA) agreement.

In the present disclosure, a frame transmitted by a STA initiating sensing-related setup (e.g., sensing session setup and/or sensing measurement setup) may be referred to as a setup request frame (e.g., a sensing session (SS) request frame and/or a sensing measurement (SM) request frame) and a frame transmitted by a STA in response may be referred to as a setup response frame (e.g., a SS response frame and/or a SM response frame).

For example, a setup request/response frame (e.g., a SS request/response frame, a SM request/response frame) may be defined as a control frame such as a RTS/CTS frame or an action frame such as an ADDBA request/response frame.

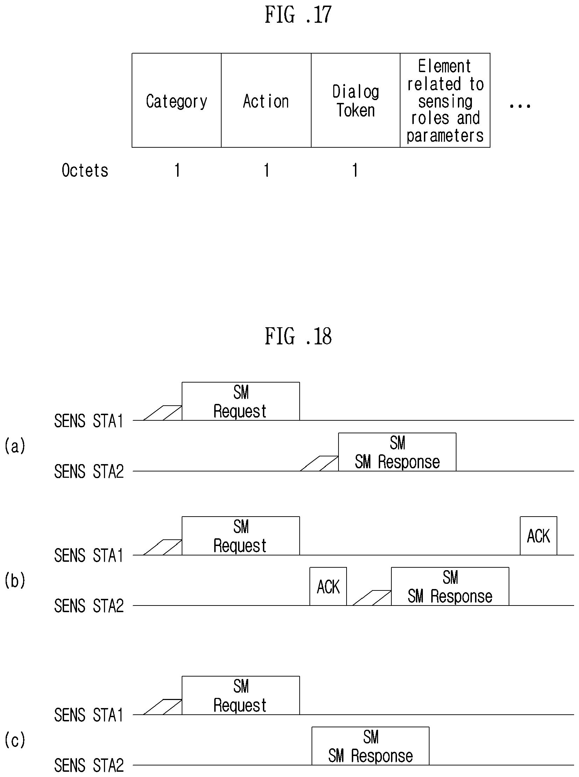

FIG. 17 is a diagram showing an example of a format of a setup request frame or a setup response frame according to the present disclosure.

A setup request/response frame may include a category, an action and a dialog token field and may additionally include element(s) related to a sensing role and parameter. A size and number of additional element(s) may be defined in various ways.

A category field may be configured as a specific value indicating WLAN sensing. For example, a specific value may be defined as 32 which does not conflict with a candidate value of an existing category field, but a scope of the present disclosure is not limited thereto.

An action field may be configured as a value corresponding to a sensing action. If it may be configured as a value corresponding to a detailed action within a sensing action, 0, 1, 2 and 3, a value of an action field, may be defined to correspond to a SS request, a SS response, a SM request and a SM response, respectively. A value of an additional action field and a matter indicated by a corresponding value may be defined in various ways. As such, the usage of an action frame (e.g., SS or SM) and a request/response frame may be classified or specified according to a value of an action field.

This example proposes four action frames, but when two request/response frames have a common format and whether there are some fields is different, only one action frame without division of a request/a response (e.g., a SM setup frame or a SS setup frame) may be defined. In this case, a type field may be further included in a frame to distinguish between a request/a response. For example, a request field is defined in a corresponding frame, and if a value of a corresponding field is 1, it may represent a SM request frame (or a SS request frame) and if that value is 0, it may represent a SM response frame (or a SS response frame).

As an additional example, in order to reduce overhead for an action field, the above-described request field and a field indicating SS or SM may be additionally defined. Since this method requires that a frame format for SS setup and SM setup will be the same, overhead may get larger for a SS setup request/response frame that requires relatively little information.

FIG. 18 is a diagram showing various examples of a sensing-related setup request and response according to the present disclosure.

In an example of FIG. 18, a SM request/response is shown as an example of sensing-related setup, but a SS request/response may be also performed in a similar manner.

As an example of FIG. 18(a), when SENS STA 1 (SENS RQSTA) transmits a SM Request through backoff, SENS STA 2 (SENS RPSTA) may perform a negotiation for sensing by transmitting a SM Response through backoff. In addition, as in an example of FIG. 18(b), a receiving STA may respond with ACK for each frame. In addition, as in an example of FIG. 18(c), if after receiving a SM Request from SENS STA 1, SENS STA 2 performs processing in SIFS and may respond to a negotiation, a SENS Response instead of ACK may be transmitted.

In a sensing-related setup procedure as described above, it may be assumed that multiple STAs perform sensing setup with STA 1. In this case, when multiple STAs may simultaneously transmit a response (i.e., a SENS response) to one request (i.e., a SENS request) from STA 1, time required for a setup process may be reduced, so an efficient setup process may be performed. To this end, in the present disclosure, examples for trigger-based sensing-related setup (e.g., SS setup and/or SM setup) may be applied to a response of at least one STA.

It is described by using SM setup as an example of a sensing-related setup procedure to which response methods described later are applied, but the same contents may be also applied to SS setup.

### Method 1

A sensing-related setup responses may be transmitted on a trigger basis. For example, a sensing-related setup request may be transmitted by using a trigger frame and in response thereto, a sensing-related setup response frame may be transmitted.

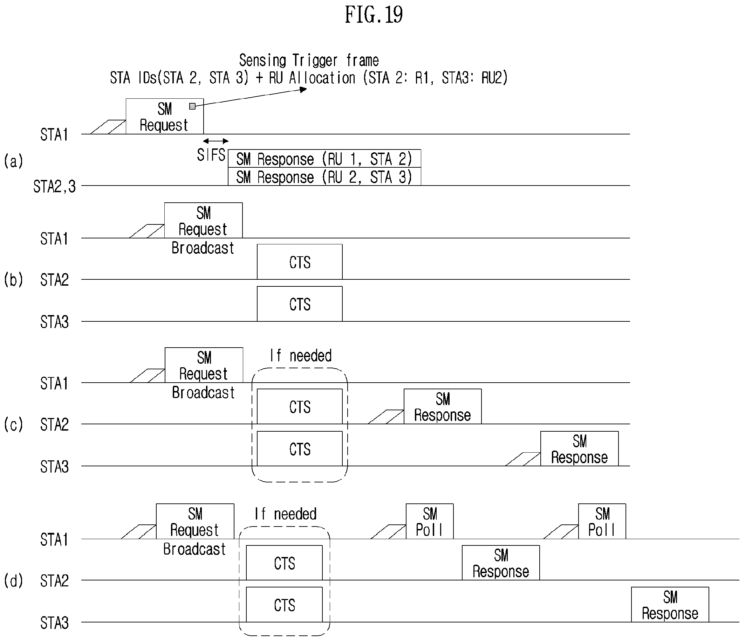

FIG. 19 is a diagram showing examples of a sensing-related setup response method according to the present disclosure.

For example, a sensing request variant may be defined as one type of a trigger frame. A sensing request trigger frame may basically include information for transmission of a response frame (e.g., RU allocation, a bandwidth, power, etc.) like a basic trigger frame. A sensing request trigger frame may additionally include specific information for sensing-related setup.

For example, information for sensing-related setup may be transmitted by using an existing reserved bit of a common information field to include common information for all STAs for sensing-related setup. In addition, information for sensing-related setup may be transmitted by using a trigger dependent common information field.

For example, in order to transmit independent setup-related request information for each STA, an existing reserved bit of a user information field may be used. In addition, information for sensing-related setup may be transmitted by using a trigger dependent user information field.

In reference to FIG. 19(a), a SM request frame using a trigger frame transmitted by STA 1 may include an ID, RU allocation information, etc. of STA 2 and STA 3. STA 2 and STA 3 which received a SM request frame may transmit a SM response frame through allocated RU1 and RU2, respectively.

This method may be applied to a STA having a capability for a trigger frame (e.g., a STA supporting a technology of 802.11ax or higher).

### Method 2

Sensing-related setup responses may be transmitted based on CTS. For example, a STA that received a sensing-related setup request may represent acceptance or rejection for a setup request through whether to transmit a CTS frame therefor.

Similar to Method 1, a STA receiving a sensing-related setup request needs time to process a SM request and generate a SM response frame, so an immediate response (e.g., response frame transmission after SIFS time after receiving a request frame) may be difficult. Accordingly, instead of transmitting a response frame including a specific parameter of a receiving STA for a sensing-related setup request frame (e.g., a sensing-related setup request frame in a trigger frame format in Method 1), a CTS or CTS-to-self frame that responds to only whether a request is accepted or rejected may be transmitted.

Since a CTS or CTS-to-self frame may not include information representing acceptance or rejection of a sensing-related setup request, a requesting STA may distinguish whether it is accepted based on whether a CTS or CTS-to-self frame is received.

For example, as in FIG. 19(c), a STA that correctly received a sensing-related request frame may transmit a CTS or CTS-to-self frame when accepting a corresponding request and may not transmit a CTS or CTS-to-self frame when rejecting a corresponding request. Accordingly, a STA that transmitted a sensing-related request frame may determine that a STA that expected a response rejected a request when a CTS or CTS-to-self frame is not received.

When a channel is occupied (or busy), a sensing response STA may not transmit a CTS or CTS-to-self frame. In this case, a requesting STA may not distinguish whether a sensing response STA rejected a sensing-related setup request or whether a channel is occupied, but there is an advantage of reducing a processing burden of a sensing response STA and if necessary, it may be supplemented by a method in which a requesting STA transmits a request frame again.

### Method 3

A sensing-related setup response may be transmitted in a delayed manner. For example, a STA that received a sensing-related setup request may immediately transmit a CTS or CTS-to-self frame as a response and transmit a (delayed) sensing-related setup response frame through a backoff process.

Method 3 may correspond to a compromise of Method 1 and 2. For example, when it is difficult to immediately respond with a setup response frame as in FIG. 19(c), STAs that received a request may transmit a CTS or CTS-to-self frame which means that they will transmit a SM response as an immediate response to a setup request frame (e.g., after SIFS time after receiving a request frame). Afterwards, through a backoff process, a SM response frame may be transmitted.

If a STA has a processing capability to generate and transmit a setup response frame immediately after receiving a setup request frame (e.g., after SIFS time), a setup response frame may be transmitted immediately without the need to transmit a CTS frame.

Since a response frame should transmit a CTS/CTS-to-self and sensing-related setup response frame, Method 3 increases overhead, but it may guarantee sufficient processing time. If a SM request uses a MU-RTS/CTS mechanism, for STAs simultaneously transmitting CTS through one 20MHz channel in a CTS response, it may be difficult to distinguish which STA responded to CTS.

### Method 4

A sensing-related setup response may be transmitted based on polling. For example, a sensing response STA transmits a response frame in a backoff manner through channel sensing after transmitting a CTS/CTS-to-self frame in Method 3, whereas it may transmit a response frame as an immediate response to a polling frame from a requesting STA in Method 4.

For example, in an example of FIG. 19(d), after STA 1 transmits a SM request, STA 2 and STA 3 may transmit CTS, and in response to polling from STA 1, STA 2 may transmit a SM response, and in response to polling from STA 1, STA 3 may transmit a SM response.

Overhead may increase compared to a trigger-based setup response method because a requesting STA should attempt channel access for polling for each sensing response STA, but a sensing-related setup procedure may be also applied to a STA that does not support a trigger frame.

### Method 5

Unlike a method in which a sensing-related setup request frame is included in a trigger frame (or defined as a type of trigger frame) in Method 1, according to this method, a sensing-related setup request frame and a trigger frame may be defined separately.

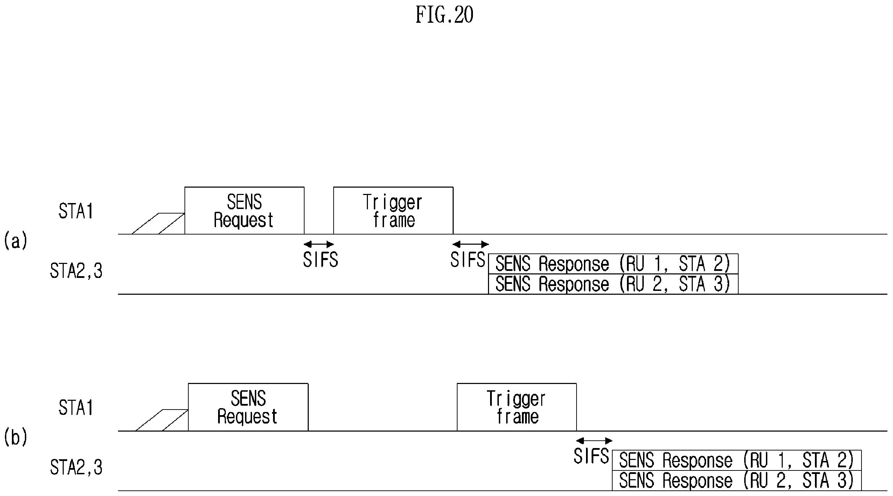

FIG. 20 is a diagram showing examples of a sensing-related setup request/response method according to the present disclosure.

In other words, a trigger frame is basically used to simultaneously trigger a sensing-related setup response frame from a plurality of STAs and a sensing-related setup request frame may be transmitted separately prior to a trigger frame.

A sensing-related setup request frame may include information/a parameter, etc. for sensing-related setup and a trigger frame may include information/a parameter, etc. for transmission of a response frame. In other words, a trigger frame does not include information related to a sensing request and may be used to trigger a sensing response frame. It is to secure the processing time of a STA transmitting a sensing response frame.

If sensing-related setup responders do not secure sufficient processing time (e.g., frame decoding and frame generation) after receiving a sensing-related setup request frame, they may not transmit a sensing-related setup response frame as an immediate response to a sensing-related setup request frame.

Accordingly, a sensing-related setup request/response-related information/parameter/field described later are not included in a sensing-related setup request frame, a type of trigger frame, but are included in a sensing-related setup request frame, a new action frame (e.g., a SENS request frame).

A common information field and a user information field may not exist in a new type of sensing-related setup request frame. For example, a SENS request frame may include information common to all STAs and further include differentiated fields using a STA ID (e.g., a partial AID) to deliver independent/individual information to each STA.

In an example of FIG. 20(a), a trigger frame is transmitted after a SENS request frame is transmitted from STA 1, and STA 2 and 3 that receive it may simultaneously transmit a SENS response frame.

In an example of FIG. 20(b), unlike an example of FIG. 20(a) in which a SENS request frame and a trigger frame are transmitted within one TXOP, a SENS request frame and a trigger frame may be transmitted in a different TXOP. In order to indicate that a trigger frame triggers a PPDU including a SENS response frame, information indicating that a trigger frame is a trigger for a SENS response may be included. For example, a bit which may indicate that it is a trigger for a SENS response may be included in a common information field, etc. of a trigger frame.

### Information included in Sensing-related Setup Request/Response Frame

Hereinafter, examples of information/a parameter/a field included in a sensing-related setup request and/or response frame are described. Examples of this information/parameter/field may be applied to the above-described sensing-related setup request/response frame including a trigger-based sensing-related setup response, a CTS-based sensing-related setup response, a delayed sensing-related setup response method, a polling-based sensing-related setup response method, a separation method of a sensing-related setup request frame and trigger frame, etc. and may be also applied to other various sensing-related setup request/response frames.

At least one of information/parameters/fields described below may be included in a sensing-related setup request and/or sensing-related setup response frame. In addition, information/a parameter/a field included in a sensing-related setup request and/or sensing-related setup response frame are not limited to examples below.
1) measurement setup identification information (measurement setup ID)
2) role
3) order
4) sensing parameter

Hereinafter, specific examples of each information are described.
1) Measurement setup identification information (or measurement setup ID or group ID) is identification information shared between STAs that make up a sensing session, and WLAN sensing may be performed during a session by using a parameter negotiated through the above-described sensing-related setup process based on corresponding identification information. In particular, measurement setup identification information may be included in a common information field or when a sensing initiator performs sensing-related setup for a plurality of sessions during one frame exchange process, it may be included as a different ID value per measurement setup in a user information field for each STA.
2) Role information may indicate whether a sensing initiator (or SENS RQSTA) and a sensing responder (or SENS RPSTA) perform a sensing transmitter role or a sensing receiver role or both of them. For example, the following exemplary modes may be defined, but are not limited thereto.

Mode 1: SENS RQSTA performs a sensing transmitter role and SENS RPSTA performs a sensing receiver role.

Mode 2: SENS RQSTA performs a sensing receiver role and SENS RPSTA performs a sensing transmitter role.

Mode 3: SENS RQSTA performs a sensing transmitter role and SENS RPSTA performs a sensing transmitter role.

Mode 4: SENS RQSTA performs a sensing receiver role and SENS RPSTA performs a sensing receiver role.

This mode may be indicated through a sensing-related setup request frame and/or a sensing-related setup response frame. For example, a role requested by a sensing initiator and a role accepted by a sensing responder may be indicated, respectively.

When 4 modes are assumed, role information may be indicated through 2 bits. For example, when a value of 2 bits is 00, 01, 10 and 11, mode 1, mode 2, mode 3 and mode 4 may be indicated, respectively. When there are more modes, the number of bits of role information may increase. Alternatively, when only mode 1 and mode 2 exist, role information may be indicated with 1 bit.

Role information may be included in a user information field to request a different role to each STA in dynamic sensing.

When a sensing initiator is an AP and does not support transmission between non-AP STAs, an AP may perform a sensing transmitter role and all non-AP STAs may perform a sensing receiver role. Alternatively, an AP may perform a sensing receiver role and all non-AP STAs may perform a sensing transmitter role. In this case, signaling overhead may be reduced by including role information in a common information field, not a user information field.

Through a sensing-related setup procedure, RQSTA (or a sensing initiator) or RPSTA (or a sensing responder) may perform both a sensing transmitter role and a sensing receiver role. In this case, it may be indicated that each STA performs a sensing transmitter role, a sensing receiver role or both a sensing transmitter role and a sensing receiver role.

For example, when it is assumed that an AP is RQSTA and a non-AP STA is RPSTA, downlink (DL) sounding may respond to RQSTA performing only a sensing transmitter role and RPSTA performing only a sensing receiver role. Uplink (UL) sounding may respond to RQSTA performing only a sensing receiver role and RPSTA performing only a sensing transmitter role. Indicating both DL sounding and UL sounding may respond to RQSTA performing both a sensing transmitter role and a sensing receiver role and RPSTA also performing both a sensing transmitter role and a sensing receiver role. As such, role information may be defined and indicated in terms of DL/UL sounding, whether DL sounding (i.e., whether a sensing response STA performs a receiver role) and UL sounding (i.e., whether a sensing response STA performs a transmitter role) is performed may be indicated through 2 bits as follows and it may be also indicated that both DL sounding and UL sounding are performed (i.e., a sensing response STA performs both a transmitter role and a receiver role).

**[Table 1]**

| Value | Encoding of role information | Role of a sensing response STA |
|---|---|---|
| 0 | DL sounding only | Not transmitter, receiver |
| 1 | UL sounding only | Transmitter, not receiver |
| 2 | both DL sounding and UL sounding | Transmitter, Receiver |
| 3 | Reserved | - |

3) Order information may indicate performance order of DL/UL sounding. Order information may be included in a common information field. For example, order information may be commonly applied to all STAs participating in sensing. Specifically, which sounding is performed (i.e., whether a role of a responding STA is a transmitter, a receiver or both) and order of each sounding may be indicated. For example, order information may be defined as in the following table.

**[Table 2]**

| Value | Encoding of order information |
|---|---|
| 0 | DL sounding only |
| 1 | UL sounding only |
| 2 | first DL sounding and second UL sounding |
| 3 | first UL sounding and second DL sounding |

When a value of order information is 0 and 1, it may correspond to a case where only one sounding is performed and a value of 2 and 3 may correspond to a case where two soundings are performed. A method of reducing signaling overhead by considering the relevance of 2) role information and 3) order information described above is described below.

When it is indicated that only DL sounding or only UL sounding is performed in order information, there is no need to signal role information because role information (i.e., only a receiver or only a transmitter) is clearly determined. In other words, role information may be needed only when a plurality of soundings are performed in order information. Accordingly, when order information and role information are combined, it may be defined as follows.

When role information always exists, a value of role information may be assumed as 0 if a value of order information is 0. In other words, when a STA confirms a value of one information without dynamic decoding for each information, it may perform decoding by assuming that a value of another information is fixed.

When a size of role information varies depending on order information, if a value of order information is 0 or 1, role information may not exist and if a value of order information is 2 or 3, role information may exist. Accordingly, signaling overhead may be reduced.

4) A sensing parameter may include at least one of a parameter set related to transmission of a sensing signal and a parameter set related to measurement/feedback (reporting). A sensing parameter in examples below is not limited and some or all of them may be indicated. When the same parameter set is requested for all STAs, it may be included in a common information field and when a different parameter (e.g., a bandwidth, RU, etc.) is applied to each STA, it may be included in a user information field.

Examples of a transmission parameter are as follows.

Number of used antennas (or spatial streams): The number of antennas or the number of spatial streams for transmitting a sensing signal

Signal Type: Type of sensing signal (e.g., NDP announcement and NDP transmission, transmission of NDP only, transmission of a new type of signal after an announcement frame for a new signal type, transmission of a new type of signal only, etc.)

Signal Length: Transmission time or length of a sensing signal

Measurable Bandwidth: Maximum bandwidth for a sensing signal (e.g., even if a frame received before a sensing signal has a 80MHz, a sensing signal may be transmitted in a 40MHz bandwidth if this parameter is configured as 40MHz. In other words, when obtaining a TXOP, it may be reduced to be smaller than a transmission bandwidth of a first frame to transmit a sensing signal.)

Number of sensing signals: Since a sensing signal may be transmitted consecutively several times, not with one-shot, indicate how many times a sensing signal is transmitted (e.g., how many times a NDP will be transmitted at a SIFS interval may be indicated)

Sensing Period (SP) related Parameter: When only an implicit method is used, a sensing transmitter may transmit a sensing signal without a special request from a sensing initiator. Accordingly, sensing period-related parameters therefor may be defined. For example, a start time point of a sensing period (e.g., a time difference/offset value based on next beacon transmission time), a length of a sensing period, a time interval between sensing periods, etc. may be defined as a sensing period-related parameter. A sensing period-related parameter may not be included in a transmission parameter set.

Frequency (or RU) location to be transmitted: Frequency/RU location to transmit a sensing signal (e.g., when transmitting a 80MHz sensing signal, a sensing signal may be transmitted in a primary 40MHz channel or a secondary 40MHz channel among 80MHz bandwidths)

Examples of a measurement/feedback (reporting)-related parameter are as follows.

Frequency (or RU) location to be sensed: Frequency/RU location where a sensing signal should be measured (e.g., when a 80MHz sensing signal is received, a sensing signal may be measured in a primary 40MHz channel or a secondary 40MHz channel among 80MHz bandwidths)

Feedback (or report) type: Type of information to be measured and fed back by receiving a sensing signal (e.g., channel state information (CSI), more specifically, CSI per subcarrier, CSI per bandwidth, CSI per spatial stream, etc.)

### Dynamic Indication Method

A request/response parameter may vary dynamically depending on role information in the above-described examples. Accordingly, rather than including all request parameters in one request frame, a dynamic indication method for reducing overhead may be considered.

As an implicit method, whether to include a parameter according to a role may be determined. In other words, according to a role of a sensing responder, whether to include a relevant parameter set may be determined.

For example, when a role of a sensing responder is a receiver (e.g., performs only a receiver role or performs both a transmitter role and a receiver role), a measurement/feedback (reporting)-related parameter set may be included in a sensing-related setup request/response frame excluding a parameter set related to sensing signal transmission.

For example, when a role of a sensing responder is a transmitter (e.g., performs only a transmitter role or performs both a transmitter role and a receiver role), a parameter set related to sensing signal transmission may be included in a sensing-related setup request/response frame excluding a measurement/feedback (reporting)-related parameter set.

Whether to include a parameter may be determined through an explicit indication. For example, a presence field for each parameter (or parameter set) may be defined.

For example, a transmission parameter set presence subfield may be included in a sensing-related setup request/response frame and whether to include a transmission parameter set may be indicated through a value of a corresponding subfield.

For example, a measurement/feedback (reporting)-related parameter set presence subfield may be included in a sensing-related setup request/response frame and whether to include a measurement/feedback (reporting)-related parameter set may be indicated through a value of a corresponding subfield.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, 5G system, but may be applied to various WLAN or wireless communication systems other than the IEEE 802.11-based system.

## Claims

1. A method for performing sensing-related setup by a first station (STA) in a wireless local area network (WLAN) system, the method comprising:
transmitting, to the second STA, a setup request frame including information related to a role of a second STA; and
receiving a setup response frame from the second STA,
wherein the information related to the role of the second STA indicates a sensing transmitter role for the second STA, indicates a sensing receiver role for the second STA, or indicates both the sensing transmitter role and the sensing receiver role for the second STA.

2. The method of claim 1, wherein:
the setup request frame further includes measurement setup identification information,
the second STA is a sensing responder corresponding to the measurement setup identification information.

3. The method of claim 1, wherein:
the setup response frame includes information related to the role of the second STA.

4. The method of claim 1, wherein:
the information related to the role of the second STA is indicated through 2 bits.

5. The method of claim 1, wherein based on the information related to the role of the second STA indicating the sensing receiver role for the second STA, or indicating both the sensing transmitter role and the sensing receiver role for the second STA:
sensing measurement reporting related information is included in at least one of the setup request frame or the setup response frame.

6. The method of claim 5, wherein:
the sensing measurement reporting related information includes information indicating a sensing measurement reporting type.

7. The method of claim 1, wherein:
the setup request frame is a sensing measurement setup request frame,
the setup response frame is a sensing measurement setup response frame.

8. The method of claim 1, wherein:
at least one of the setup request frame or the setup response frame has an action frame format.

9. The method of claim 1, wherein:
the setup response frame includes at least one setup response frame transmitted by at least one STA including the second STA,
the at least one setup response frame is transmitted simultaneously by the at least one STA, or
the at least one setup response frame is transmitted individually by the at least one STA.

10. A first station (STA) device for performing sensing-related setup in a wireless local area network (WLAN) system, the device comprising:
at least one transceiver; and
at least one processor coupled with the at least one transceiver,
wherein the at least one processor is configured to:
transmit, through the at least one transceiver, to the second STA, a setup request frame including information related to a role of a second STA; and
receive, through the at least one transceiver, a setup response frame from the second STA,
wherein the information related to the role of the second STA indicates a sensing transmitter role for the second STA, indicates a sensing receiver role for the second STA, or indicates both the sensing transmitter role and the sensing receiver role for the second STA.

11. A method for performing sensing-related setup by a second station (STA) in a wireless local area network (WLAN) system, the method comprising:
receiving, from a first STA, a setup request frame including information related to a role of the second STA; and
transmitting a setup response frame to the first STA,
wherein the information related to the role of the second STA indicates a sensing transmitter role for the second STA, indicates a sensing receiver role for the second STA, or indicates both the sensing transmitter role and the sensing receiver role for the second STA.

12. A second station (STA) device for performing sensing-related setup in a wireless local area network (WLAN) system, the device comprising:
at least one transceiver; and
at least one processor coupled with the at least one transceiver,
wherein the at least one processor is configured to:
receive, through the at least one transceiver, from a first STA, a setup request frame including information related to a role of the second STA; and
transmit, through the at least one transceiver, a setup response frame to the first STA,
wherein the information related to the role of the second STA indicates a sensing transmitter role for the second STA, indicates a sensing receiver role for the second STA, or indicates both the sensing transmitter role and the sensing receiver role for the second STA.

13. A processing apparatus configured to control a station (STA) in a wireless local area network (WLAN) system, the processing apparatus comprising:
at least one processor; and
at least one computer memory operably connected to the at least one processor and storing instructions for performing a method according to Claim 1 based on being executed by the at least one processor.

14. At least one non-transitory computer-readable medium storing at least one instruction, wherein:
the at least one instruction controls a station (STA) device to perform a method according to Claim 1 in a wireless local area network (WLAN) system by being executed by at least one processor.
